# EUROPÄISCHE PATENTSCHRIFT

(11) **EP 3 195 451 B1**
(45) Veröffentlichungstag und Bekanntmachung des Hinweises auf die Patenterteilung: **05.12.2018**
(21) Anmeldenummer: 15763569.9
(22) Anmeldetag: 14.09.2015
(51) Int. Cl.: H02K 15/04, H02K 15/095

(54) **VERFAHREN ZUM BEWICKELN EINER VIELZAHL VON SPULENKÖRPERN UND SEGMENTSPINDEL**
METHOD FOR WINDING A PLURALITY OF COIL BODIES AND SEGMENTED SPINDLE
PROCÉDÉ DE BOBINAGE D'UNE PLURALITÉ DE CARCASSES DE BOBINES ET MANDRIN SEGMENTÉ

(30) Priorität: 16.09.2014 DE 102014218602
(43) Veröffentlichungstag der Anmeldung: 26.07.2017
(73) Patentinhaber: Continental Automotive GmbH, 30165 Hannover (DE)
(72) Erfinder: SCHEIN, Uwe, 34260 Kaufungen (DE)
(86) Internationale Anmeldenummer: PCT/EP2015/070983
(87) Internationale Veröffentlichungsnummer: WO 2016/041909

(56) Entgegenhaltungen:
- EP-A1- 1 843 447
- EP-A2- 1 684 399
- WO-A1-2005/004311
- JP-A- 2009 153 334
- US-A1- 2003 030 345
- US-A1- 2007 182 271

## Beschreibung

Die vorliegende Erfindung betrifft ein Verfahren zum Bewickeln einer Vielzahl von Spulenkörpern für die Herstellung von Elektromotoren. Die Erfindung bezieht sich ferner auf eine Segmentspindel zur Verwendung in einem derartigen Verfahren.

Zum Bewickeln von Spulenkörpern ist es bekannt, jeden einzelnen Spulenkörper auf je eine Spindel aufzuspannen. Durch die Drehbewegung der Spindel wird der Wickeldraht auf den Spulenkörper aufgespult. Hierfür werden in der Fertigung in Serie entweder mehrere Spulen nacheinander gefertigt, oder alternativ wird mittels mehrerer Spindeln eine vielfache Anzahl an Spulenkörpern bewickelt. Zum Bewickeln wird dabei eine Wickelmaschine eingesetzt.

Um mehrere Spulenkörper synchron zu bewickeln, finden daher mehrere Spindeln Verwendung, wobei sich jeweils ein Spulenkörper auf einer Spindel befindet. Dies stellt einen beträchtlichen Aufwand dar. Es müssen aufwändig gestaltete und sehr genau synchronisierte Antriebsspindeln eingesetzt werden. Ferner ist der Bestückungsaufwand in der Wickelmaschine groß.

Aus der DE 10 2005 001 705 A1 ist ein Verfahren zur Herstellung von Ankern bekannt, bei dem jeweils zwei Zähne eines einteiligen Kernteilelementes bewickelt werden. Die Veröffentlichung betrifft daher nicht das Bewickeln von einzelnen aneinandergesetzten Spulenkörpern.

Die EP 1 684 399 A2 beschreibt einen Stator, bei dem einzelnen Spulenkörper aneinandergesetzt werden und die gebildete Einheit zwischen zwei Klemmen einer Wickelmaschine angeordnet und dann bewickelt wird. Die Spulenkörper werden hierbei über magnetische Kräfte aneinandergehalten.

Die EP 2 048 768 A2 beschreibt einen Stator, bei dem Spulenkörper und Zwischenstücke zu einer Reihe aneinandergesetzt werden und die hierdurch gebildete Einheit in eine Wickelmaschine eingesetzt und bewickelt wird.

In der US 3 337 145 A und der JP H03- 138 918 A sind weitere Verfahren zum Bewickeln von Spulenkörpern beschrieben, bei denen Spulenkörper und Zwischenstücke aneinandergesetzt werden und die gebildete Einheit in einer Wickelmaschine bewickelt wird.

Der vorliegenden Erfindung liegt die Aufgabe zugrunde, ein Verfahren der eingangs wiedergegebenen Art zur Verfügung zu stellen, das sich auf besonders einfache und kostengünstige Weise durchführen lässt.

Diese Aufgabe wird erfindungsgemäß durch ein Verfahren zum Bewickeln einer Vielzahl von Spulenkörpern für die Herstellung von Elektromotoren gelöst, das die Merkmale von Patentanspruch 1 aufweist.

Zur simultanen Bewicklung von mehreren Spulen auf einer einzigen Spindel werden ein erstes Endstück, mindestens ein Zwischenstück, ein zweites Endstück und dazwischen angeordnete, zu bewickelnde Spulenkörper miteinander gekoppelt, so dass sich eine aus einzelnen Segmenten zusammengesetzte Spindel ergibt. Wenn beispielsweise zwei Spulenkörper simultan bewickelt werden sollen, wird eine Segmentspindel erstellt, die sich aus einem ersten Endstück, einem ersten Spulenkörper, einem Zwischenkörper, einem zweiten Spulenkörper und einem zweiten Endstück zusammensetzt. Sollen insgesamt drei Spulenkörper simultan bewickelt werden, finden zwei Endstücke und zwei Zwischenstücke zwischen drei Spulenkörpern Verwendung. Die auf diese Weise ausgebildete Segmentspindel wird in/an einer Wickelmaschine angeordnet, wonach ein synchrones Bewickeln der Spulenkörper folgt.

Erfindungsgemäß ist daher zum Bewickeln von mehreren Spulenkörpern nur noch eine einzige drehbare Spindel erforderlich, so dass eine Vielzahl von aufwändigen und sehr genau synchronisierten Antriebsspindeln entfallen kann. Auch lässt sich der Bestückungsaufwand in der Wickelmaschine wesentlich reduzieren.

Vorzugweise werden bei dem erfindungsgemäßen Verfahren Endstücke mit Wellenstummeln zur Aufnahme im/am Spindelantrieb der Wickelmaschine verwendet. Auf diese Weise lässt sich der Antrieb der segmentierten Spindel einfach und rasch einrichten und bewerkstelligen.

Weiterhin findet bei dem erfindungsgemäßen Verfahren vorzugsweise ein Zwischenstück mit einer integrierten Lagerstelle zur Abstützung der Segmentspindel Verwendung. Die Zwischenstücke sind daher vorzugsweise mit Lagerstellen versehen, so dass die segmentierte Spindel im Betrieb abgestützt werden kann, um ein Durchhängen zu verhindern. Diese Lagerstellen in den Zwischenstücken der Segmentspindel können in der Wickelmaschine gleichzeitig zur Aufnahme der Drahtzüge verwendet werden.

Die Endstücke, das mindestens eine Zwischenstück und die damit gekoppelten Spulenkörper werden formschlüssig miteinander verbunden und zwar über Steckverbindungen. Hierbei werden die Endstücke, das mindestens eine Zwischenstück und die Spulenkörper über Hinterschneidungen aneinander fixiert. Durch das Verbinden der Elemente über Steckverbindungen lässt sich eine solche segmentierte Spindel sehr rasch erstellen. Andererseits sichern derartige Steckverbindungen eine sichere Kopplung der Bauteile, die durch die Rotation der Spindel nicht beeinträchtigt wird.

Bei dem erfindungsgemäßen Verfahren können auf herkömmliche Weise ausgebildete oder neu konzipierte Spulenkörper Verwendung finden. Die beiden Seitenflansche eines Spulenkörpers werden dabei in entsprechenden passenden Ausnehmungen in den Endstücken oder Zwischenstücken angeordnet, die mit den Hinterschneidungen ausgebildet sind, so dass sich der Spulenkörper nicht in Axialrichtung aus dem Zwischenstück bzw. Endstück entfernen lässt, sondern nach oben oder unten, d. h. senkrecht zur Spindelachse, in die End- oder Zwischenstücke eingesetzt und im bewickelten Zustand wieder entfernt werden muss.

In Weiterbildung finden Zwischenstücke Verwendung, bei denen die Bereiche der integrierten Lagerstellen eine geringere Breite als das übrige Zwischenstück besitzen. Die Bereiche können beispielsweise etwa die Breite der vorgesehenen Wellenstummel haben.

Das erfindungsgemäße Verfahren ist beispielsweise für Spulenkörper geeignet, die eine längliche Querschnittsform besitzen, beispielsweise im Innenraum etwa rechteckförmig ausgebildet sind.

Durch Rotation der Segmentspindel und Relativbewegung des Drahtführers in einer herkömmlichen Wickelmaschine können beispielsweise die Wicklungen auf die Spulenkörper aufgebracht werden. Natürlich können auch speziell konzipierte Wickelmaschinen zur Durchführung des erfindungsgemäßen Verfahrens Verwendung finden.

Die vorliegende Erfindung betrifft ferner eine Segmentspindel zur Verwendung in dem vorstehend beschriebenen Verfahren. Die Segmentspindel setzt sich aus einem ersten Endstück, einem zweiten Endstück, mindestens einem Zwischenstück und dazwischen angeordneten bewickelten oder zu bewickelnden Spulenkörpern zusammen.

Die beiden Endstücke sorgen für die Antriebsverbindung der Segmentspindel und weisen vorzugsweise entsprechende Abschnitte zur Aufnahme im/am Spindelantrieb an einer Wickelmaschine auf, wobei diese Abschnitte beispielsweise als Wellenstummel ausgebildet sein können.

Die Zwischenstücke wirken als Abstandshalter zwischen den einzelnen Spulenkörpern, wobei sie vorzugsweise mindestens eine integrierte Lagerstelle besitzen, mittels denen sich die Segmentspindel abstützen kann.

Sowohl die Endstücke als auch die Zwischenstücke sind so ausgebildet, dass eine rasche und einfache formschlüssige Verbindung mit den dazwischen angeordneten Spulenkörpern möglich ist. Hierbei handelt es sich um Steckverbindungen, die mittels Ausnehmungen mit Hinterschneidungen in den Endstücken und/oder Zwischenstücken realisiert sind. Wie bereits erwähnt, lassen sich dabei die Spulenkörper von oben oder von unten in die entsprechenden Ausnehmungen der Endstücke und Zwischenstücke einschieben, während eine axiale Kopplung oder eine Kopplung durch seitliches Einschieben ausgeschlossen ist.

Eine solche Segmentspindel oder segmentierte Spindel lässt sich daher durch abwechselndes Koppeln von End/Zwischenstücken und Spulenkörpern rasch und einfach erstellen, und es lassen sich die einen Teil der Spindel bildenden Spulenkörper ohne weiteres simultan bewickeln. Nach Beendigung des Wickelvorganges können die Spulenkörper entnommen werden, beispielsweise nach oben oder nach unten, wie vorstehend erläutert.

Die Erfindung wird nachfolgend anhand eines Ausführungsbeispiels in Verbindung mit der Zeichnung im Einzelnen erläutert. Es zeigen:
- Figur 1: eine Draufsicht auf ein Ausführungsbeispiel einer Segmentspindel;
- Figur 2: eine Ansicht der Segmentspindel der Figur 1 von vorn;
- Figur 3: eine Draufsicht auf ein Ausführungsbeispiel einer Segmentspindel mit insgesamt 5 Spulenkörpern; und
- Figur 4: eine Draufsicht auf ein weiteres Ausführungsbeispiel einer Segmentspindel.

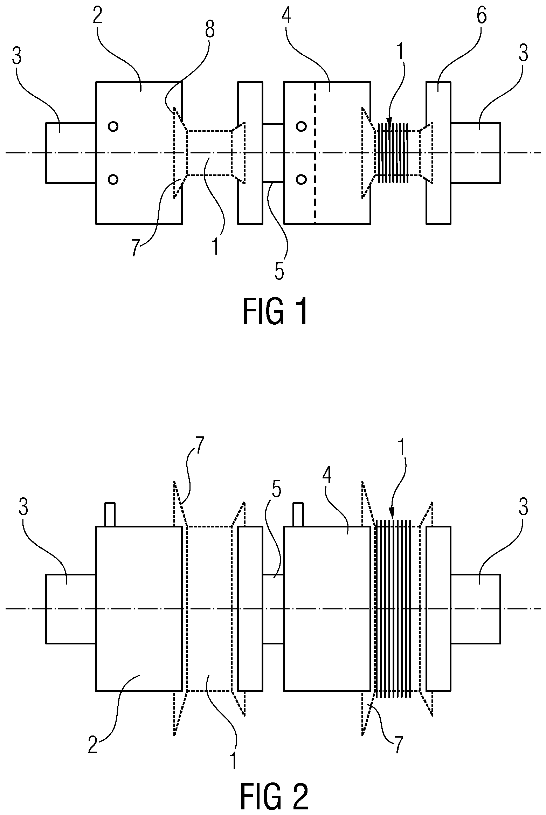

Die in Figur 1 in der Ansicht von oben und in Figur 2 in der Ansicht von vorne dargestellte Segmentspindel setzt sich aus einem ersten Endstück 2 (in der Figur links dargestellt), einem Spulenkörper 1, einem Zwischenstück 4, einem Spulenkörper 1 und einem zweiten Endstück 6 (in der Figur rechts dargestellt) zusammen. Beide Endstücke sind jeweils mit einem Wellenstummel 3 versehen, um eine Verbindung mit einem Wickelmaschinenantrieb herzustellen.

Das Zwischenstück 4 besitzt einen schmaleren, als Lagerstelle dienenden Bereich 5, der zur Abstützung der Spindel beim Bewicklungsvorgang dient. Die Spulenkörper 1 sind in herkömmlicher Weise ausgebildet und besitzen jeweils einen Seitenflansch 7, der in einer Hinterschneidungen aufweisenden Ausnehmung 8 im Endstück 2 und im Zwischenstück 4 angeordnet ist. Im Übrigen hat der Spulenkörper 1 in der Vorderansicht etwa Rechteckform.

Um einen synchronen Bewicklungsvorgang von mehreren Spulenkörpern 1 durchzuführen, werden diese mit den Endstücken 2 und 6 sowie dem Zwischenstück 4 gekoppelt. Dies geschieht dadurch, dass die Spulenkörper 1 von oben in die entsprechenden Ausnehmungen 8 in den Endstücken und dem Zwischenstück 4 eingeschoben werden. Nachdem auf diese Weise die Segmentspindel vervollständigt ist, wird sie in eine Wickelmaschine eingesetzt und werden die entsprechenden Wellenstummel 3 mit dem Antrieb der Wickelmaschine verbunden. Die Spindel kann dann rotieren, um die beiden Spulenkörper 1 synchron zu bewickeln. Nach Abschluss des Bewicklungsvorganges können die bewickelten Spulenkörper wieder von der Segmentspindel entfernt werden.

Figur 2 zeigt die Segmentspindel der Figur 1 in der Vorderansicht.

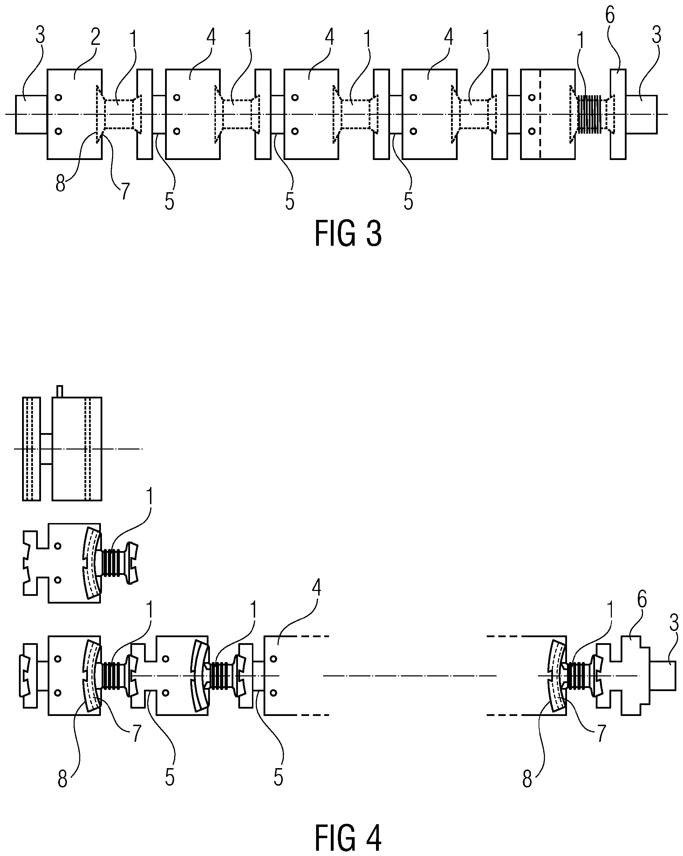

In Figur 3 ist eine Ansicht von oben einer Segmentspindel gezeigt, die einen entsprechenden Aufbau aufweist wie die der Figur 1, wobei hier allerdings fünf Spulenkörper 1 zum Bewickeln vorgesehen sind. Auch hier werden die Spulenkörper 1 in hinterschnittene Ausnehmungen 8 der Endstücke 2 und Zwischenstücke 4 eingesetzt, um einen synchronen Bewicklungsvorgang durchzuführen.

Die in Figur 4 gezeigte Ausführungsform einer Segmentspindel unterscheidet sich von der der Figuren 1 - 3. In der dargestellten Ansicht von oben ist zu erkennen, dass hierbei anders ausgebildete Spulenkörper 1 zur Anwendung kommen, die gebogene Endflansche 7 aufweisen, welche in angepassten Ausnehmungen 8 der Endstücke und Zwischenstücke angeordnet sind. Auch die hier dargestellten Zwischenstücke besitzen schmalere Bereiche 5, die als Lagerstellen zur Unterstützung der rotierenden Segmentspindel dienen.

## Patentansprüche

1. Verfahren zum Bewickeln einer Vielzahl von Spulenkörpern (1) für die Herstellung von Elektromotoren mit den folgenden Schritten:
Herstellen einer sich aus einem ersten Endstück (2), mindestens einem Zwischenstück (4), einem zweiten Endstück (6) und dazwischen angeordneten, zu bewickelnden Spulenkörpern (1) zusammensetzenden Segmentspindel; und
Anordnen der Segmentspindel in/an einer Wickelmaschine und synchrones Bewickeln der Spulenkörper,
wobei die Endstücke (6), das mindestens eine Zwischenstück (4) und die Spulenkörper (1) über Hinterschneidungen aneinander gesteckt werden und sich die Spulenkörper (1) nur nach oben und unten, d.h. senkrecht zur Spindelachse, in die End- oder Zwischenstücke (2, 4) einsetzen und im bewickelten Zustand wieder entfernen lassen.

2. Verfahren nach Anspruch 1, **dadurch gekennzeichnet, dass** Endstücke (2, 6) mit Wellenstummeln (3) zur Aufnahme im/am Spindelantrieb der Wickelmaschine verwendet werden.

3. Verfahren nach Anspruch 1 oder 2, **dadurch gekennzeichnet, dass** das eine Zwischenstück (4) mit einer integrierten Lagerstelle (5) zur Abstützung der Segmentspindel verwendet wird.

4. Verfahren nach einem der vorangehenden Ansprüche, **dadurch gekennzeichnet, dass** durch Rotation der Segmentspindel mit Relativbewegung des Drahtführers in einer herkömmlichen Wickelmaschine die Wicklungen auf die Spulenkörper (1) aufgebracht werden.

5. Segmentspindel zur Verwendung in einem Verfahren nach einem der vorangehenden Ansprüche, die sich aus einem ersten Endstück (2), einem zweiten Endstück (6), mindestens einem Zwischenstück (4) und dazwischen angeordneten bewickelten oder zu bewickelnden Spulenkörper (1) zusammensetzt, wobei die Endstücke (6), das mindestens eine Zwischenstück (4) und die Spulenkörper (1) über Hinterschneidungen aneinander gesteckt sind und sich die Spulenkörper (1) nur nach oben und unten, d.h. senkrecht zur Spindelachse, in die End- oder Zwischenstücke (2, 4) einsetzen und im bewickelten Zustand wieder entfernen lassen.

6. Segmentspindel nach Anspruch 5, **dadurch gekennzeichnet, dass** das erste und zweite Endstück (2, 6) mit Wellenstummeln (3) zur Aufnahme im/am Spindelantrieb einer Wickelmaschine versehen sind.

7. Segmentspindel nach Anspruch 5 oder 6, **dadurch gekennzeichnet, dass** das mindestens eine Zwischenstück (4) eine integrierte Lagerstelle (5) zur Abstützung der Segmentspindel aufweist.

## Claims

1. Method for winding a multiplicity of coil bodies (1) for the production of electric motors, comprising the following steps:
producing a segmented spindle that is assembled from a first end piece (2), at least one intermediate piece (4), a second end piece (6), and interdisposed coil bodies (1) to be wound; and
disposing the segmented spindle in/on a winding machine, and synchronous winding of the coil bodies;
wherein the end pieces (6), the at least one intermediate piece (4), and the coil bodies (1) by way of undercuts are plug-fitted to one another, the coil bodies (1) being able to be inserted into the end or intermediate pieces (2, 4) only in an upward and downward manner, i.e. perpendicular to the spindle axis, and being able to be removed again only in the wound state.

2. Method according to Claim 1, **characterized in that** end pieces (2, 6) having shaft stubs (3) for receiving in/on the spindle drive of the winding machine are used.

3. Method according to Claim 1 or 2, **characterized in that** the one intermediate piece (4) having an integrated bearing point (5) is used for supporting the segmented spindle.

4. Method according to one of the preceding claims, **characterized in that** the coils are applied to the coil bodies (1) in a conventional winding machine by rotation of the segmented spindle by way of a relative motion of the wire guide.

5. Segmented spindle for use in a method according to one of the preceding claims, said segmented spindle being assembled from a first end piece (2), a second end piece (6), at least one intermediate piece (4), and interdisposed coil bodies (1) that are wound or to be wound, wherein the end pieces (6), the at least one intermediate piece (4), and the coil bodies (1) by way of undercuts are plug-fitted to one another, the coil bodies (1) being able to be inserted into the end or intermediate pieces (2, 4) only in an upward and downward manner, i.e. perpendicular to the spindle axis, and being able to be removed again only in the wound state.

6. Segmented spindle according to Claim 5, **characterized in that** the first and the second end piece (2, 6) are provided with shaft stubs (3) for receiving in/on the spindle drive of a winding machine.

7. Segmented spindle according to Claim 5 or 6, **characterized in that** the at least one intermediate piece (4) has an integrated bearing point (5) for supporting the segmented spindle.

## Revendications

1. Procédé de bobinage d'une pluralité de corps de bobines (1) pour la fabrication de moteurs électriques, comprenant les étapes suivantes :
fabrication d'une broche segmentée constituée d'une première pièce de bout (2), d'au moins une pièce intermédiaire (4), d'une deuxième pièce de bout (6) et de corps de bobines (1) devant être bobinés, disposés entre celles-ci ; et
agencement de la broche segmentée dans/sur une machine de bobinage et bobinage synchrone des corps de bobines,
les pièces de bout (6), l'au moins une pièce intermédiaire (4) et les corps de bobines (1) étant enfichés les uns sur les autres par le biais de contre-dépouilles et les corps de bobines (1) s'insérant et pouvant à nouveau être enlevés dans l'état bobiné seulement de haut en bas, c'est-à-dire perpendiculairement par rapport à l'axe de bobine dans les pièces de bout ou intermédiaire (2, 4).

2. Procédé selon la revendication 1, **caractérisé en ce que** les pièces de bout (2, 6) sont utilisées avec des tronçons d'arbre (3) pour la réception dans/sur un entraînement de broche de la machine de bobinage.

3. Procédé selon la revendication 1 ou 2, **caractérisé en ce que** l'une des pièces intermédiaires (4) est utilisée avec un support de palier intégré (5) pour le support de la broche segmentée.

4. Procédé selon l'une quelconque des revendications précédentes, **caractérisé en ce que** les enroulements sont appliqués sur les corps de bobines (1) par rotation de la broche segmentée avec un mouvement relatif d'un guide-fil dans une machine de bobinage usuelle.

5. Broche segmentée destinée à l'utilisation dans un procédé selon l'une quelconque des revendications précédentes, qui se compose d'une première pièce de bout (2), d'une deuxième pièce de bout (6), d'au moins une pièce intermédiaire (4) et de corps de bobines (1) enroulés ou devant être enroulés, disposés entre celles-ci, les pièces de bout (6), l'au moins une pièce intermédiaire (4) et les corps de bobines (1) étant enfichés les uns sur les autres par le biais de contre-dépouilles et les corps de bobines (1) s'insérant et pouvant à nouveau être enlevés dans l'état bobiné seulement de haut en bas, c'est-à-dire perpendiculairement par rapport à l'axe de bobine dans les pièces de bout ou intermédiaire (2, 4).

6. Broche segmentée selon la revendication 5, **caractérisée en ce que** la première et la deuxième pièce de bout (2, 6) sont pourvues de tronçons d'arbre (3) pour la réception dans/sur un entraînement de broche d'une machine de bobinage.

7. Broche segmentée selon la revendication 5 ou 6, **caractérisée en ce que** l'au moins une pièce intermédiaire (4) présente un support de palier intégré (5) pour le support de la broche segmentée.
